# EUROPEAN PATENT APPLICATION

(11) **EP 4 152 270 A1**
(43) Date of publication of application: **22.03.2023**
(21) Application number: 21197754.1
(22) Date of filing: 20.09.2021
(51) Int. Cl.: G06T 19/00

(54) **METHOD OF GENERATING AN INTERACTIVE THREE-DIMENSIONAL SIMULATION OF A SECTION OF AN INDUSTRIAL FACILITY**

(71) Applicant: Siemens Aktiengesellschaft, 80333 München (DE)
(72) Inventor: The designation of the inventor has not yet been filed
(74) Representative: Siemens Patent Attorneys

(57) **Abstract**

The current disclosure describes a method of generating an interactive three-dimensional simulation of a section of an industrial facility. The method comprises obtaining a point cloud model and a three dimensional mesh model associated with the section of the industrial facility, generating a hybrid model based on the point cloud model and the three dimensional mesh model, the hybrid model includes a first part associated with the point cloud model and a second part associated with the three dimensional mesh model; and generating the interactive three dimensional simulation of the section of the industrial facility based on the hybrid model. Visual elements of the interactive three-dimensional simulation are based on the first part of the hybrid model and the physics of the interactive three-dimensional simulation are based on the second part of the hybrid model.

## Description

### Background

The current disclosure relates to visual representations and simulations used in operator training, plant familiarization, etc. In these days, as the technology has evolved a lot, many plant operators often create immersive environments for their plants and industrial facilities for improving familiarity of operators with the plants using the immersive environments. For example, the immersive environments may be used for performing walkaround for familiarization of process plant where the operator, represented by an avatar, wants to be sure which areas are accessible, training of operator personnel, represented by avatars, in process plant which includes several levels and requires going up/down ladders.

### Description

The current disclosure relates to visual representations or simulations used in industrial environments. As mentioned above, such visual representations or simulations may be used for operator training, plant demonstration, etc. When the visual representations are used, the operator is displayed in the visual representation using a visual avatar which may be moved around based on the inputs from the operator. When such avatars are moved around in the visual representation, collisions between the user avatar and the existing objects in the visual representation must be detected to prevent the user avatar going through the objects them and to ensure that the user/operator has an immersive experience.

Conventionally, such collision detection is performed by evaluating collision against each point of the model used in generating the visual representation. However, this approach requires high computational resources and could be useful on batch processes to check for collisions of 3D geometry against a subset of the complete point cloud. In another approach, the model is divided on different sets which is represented by spheres. Then the collision is done against the spheres. This is useful in lower computation requirements; however, the precision of the collisions may not be very high. In yet another approach, using the point cloud, 3D meshes are manually designed with a CAD application to fulfill a high-level environment, normally representing walls, stairs and ground. This approach is useful for basic familiarization but can't be used to have a full immersion as the effort to redraw every object of the point cloud can't be afforded. Moreover, in some cases, utilization of meshes might require texture streaming algorithms as the number of textures are very high and the resolution of these is also very high. In addition, the accuracy of the 3D mesh is normally reduced during the reconstruction process. Additionally, these approaches do not scale well when the point cloud dataset is big and has complex shapes, which is the case in a process plant. Accordingly, there is a need for a method and device which addresses the issues mentioned above.

Accordingly, the current disclosure describes a method of generating an interactive three-dimensional simulation of a section of the industrial facility. The method comprises obtaining a point cloud model and a three dimensional mesh model associated with the section of the industrial facility, generating a hybrid model based on the point cloud model and the three dimensional mesh model, the hybrid model includes a first part associated with the point cloud model and a second part associated with the three dimensional mesh model; and generating the interactive three dimensional simulation of the section of the industrial facility based on the hybrid model. one or more visual elements of the interactive three-dimensional simulation are based on the first part of the hybrid model and the physics of the interactive three-dimensional simulation are based on the second part of the hybrid model. One or more collisions in the three-dimensional simulation of the section of the industrial facility are determined using the second part of the hybrid model.

Accordingly, the current disclosure describes a method where the visual simulation is generated using a hybrid model generated from a point model and a three-dimensional mesh model. Accordingly, using the hybrid model, the visual simulation may be generated without using texture streaming and does not require high texture packs. Additionally, using the hybrid model, collisions made be detected effectively using the mesh-based physics without requiring significant computations. The reconstructed 3D mesh is a perfect representation of the point cloud data set. Therefore, when physics based on the hybrid model are applied, the collisions are very accurate, and user collides even against small objects like manual valves or small piping.

Additionally, the hybrid model allows for optimized data management, since data of the point cloud and the three dimensional meshes model is stored and processed together, therefore allowing for the render of the hybrid model to be streamed to the viewer faster. Moreover, since the render is done using the hybrid model, the render quality is higher than using preexisting mesh models. Accordingly, the current disclosure allows doing real time immersive visualization for operational reviews and training proposes of process plants. Additionally, this may be used for brownfield projects where there are no CAD data.

In an example, the method comprises generating a file associated with the hybrid model using the point cloud model and the three-dimensional mesh model. Accordingly, the data storage required for the hybrid model is less than two separate models stored separately. In an example, the method comprises generating a user entity based one or more user inputs and detecting a collision between the user entity and an object in the three-dimensional simulation of the section of the industrial facility based on the second part of the hybrid model. Accordingly, the current disclosure allows for representation of the user via the user entity i.e., the user avatar and allows for movement of the user avatar within the visual representation of the industrial facility. Additionally, the hybrid model detects collisions detect the user entity and the objects in the visual simulation thereby preventing incorrect display or rendering within the visual simulation. In an example, the three-dimensional simulation is for operator training and industrial facility review.

In an example, the point cloud model and the three-dimensional mesh model are generated from a point cloud dataset associated with the section of the industrial facility. Accordingly, the same data set is used for generating both the point cloud model and the three-dimensional mesh model and therefore there no data inconsistencies between both the models. In an example, the three-dimensional mesh model is generated from the point data cloud model and accordingly, the three-dimensional mesh model is inline with the point data cloud model.

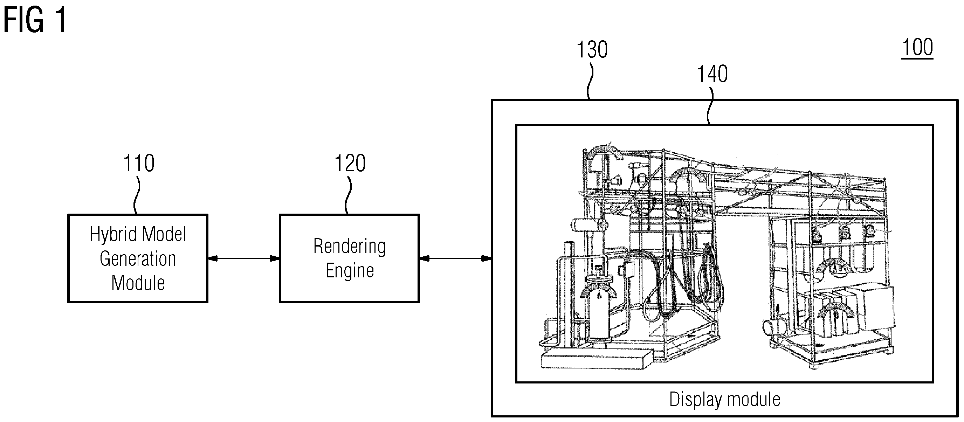

In another aspect, the current disclosure describes a device for generating an interactive three-dimensional simulation of a section of the industrial facility. The device comprises one or more processors connected to a memory module. The one or more processors are configured to obtain a point cloud model and a three dimensional mesh model associated with the section of the industrial facility, generate a hybrid model based on the point cloud model and the three dimensional mesh model, wherein the hybrid model includes a first part associated with the point cloud model and a second part associated with the three dimensional mesh model; and generate the interactive three dimensional simulation of the section of the industrial facility based on the hybrid model wherein one or more visual elements of the interactive three dimensional simulation are based on the first part of the hybrid model and wherein the physics of the interactive three dimensional simulation is based on the second part of the hybrid model. The one or more collisions in the three-dimensional simulation of the section of the industrial facility are determined using the second part of the hybrid model. In yet another aspect, the current disclosure describes a non-transitory storage medium for generating an interactive three-dimensional simulation of a section of the industrial facility. The non-transitory storage medium comprises a plurality of instructions, which when executed on one or more processors, cause the one or more processors to obtain a point cloud model and a three dimensional mesh model associated with the section of the industrial facility; generate a hybrid model based on the point cloud model and the three dimensional mesh model, wherein the hybrid model includes a first part associated with the point cloud model and a second part associated with the three dimensional mesh model; and generate the interactive three dimensional simulation of the section of the industrial facility based on the hybrid model wherein one or more visual elements of the interactive three dimensional simulation are based on the first part of the hybrid model and wherein the physics of the interactive three dimensional simulation is based on the second part of the hybrid model. One or more collisions in the three-dimensional simulation of the section of the industrial facility are determined using the second part of the hybrid model. The advantages of the above method apply to the device and the non-transitory storage medium aspects as well. These aspects are further described in reference to figures 1-3.
Figure 1 illustrates a system for generating a three-dimensional interactive visual simulation of a section of an industrial facility;
Figure 2 illustrates a method for generating the interactive three-dimensional simulation of a section of the industrial facility; and
Figure 3 illustrates a display device for generating the interactive three-dimensional simulation of a section of the industrial facility.

Figure 1 illustrates a system 100 for generating a three-dimensional interactive visual simulation 140 of a section of the industrial facility. The system 100 includes a hybrid model generation module 110 which is configured to generate a hybrid model which is used to generate the three-dimensional interactive visual simulation. The hybrid model generation module is configured to receive a point cloud model of the section of the industrial facility and generate the hybrid model from the point cloud model. Subsequent to the generation of the hybrid model, the hybrid model generation module transmits the hybrid model to a render engine 120.

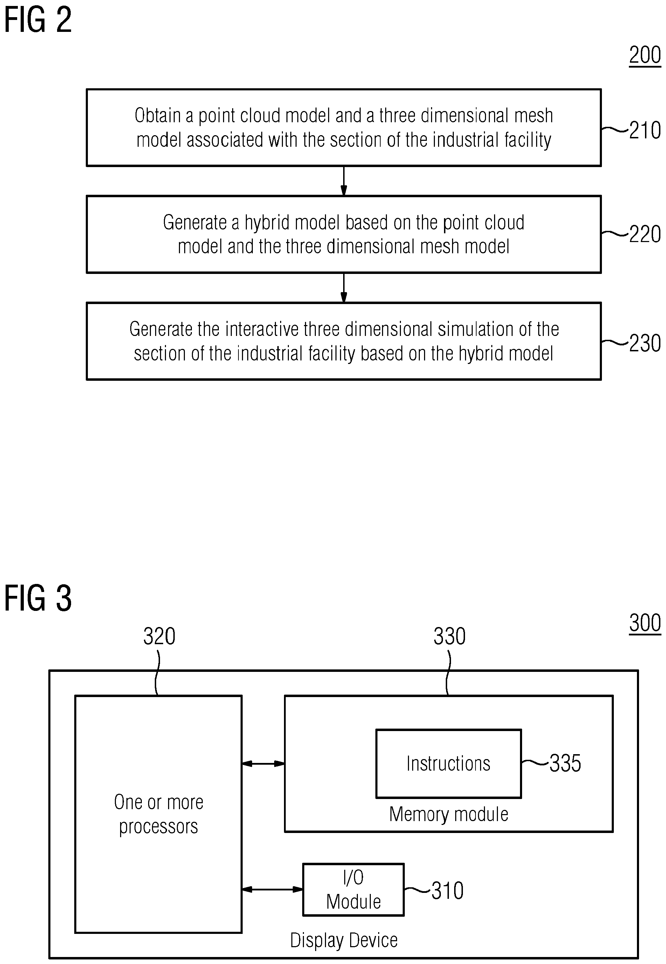

The render engine 120 is configured to render the three-dimensional interactive visual simulation 140 on a display module 130 based on the hybrid model 130. Additionally, one or more user input devices may be connected to the render engine 120 for receiving user input from an operator and change or update aspects of the three-dimensional interactive visual simulation. Additionally, the render engine 120 is configured to generate a user avatar within the three-dimensional interactive visual simulation. Additionally, the render engine is configured to continuously update the user avatar and the three-dimensional interactive visual simulation based on user inputs. During the update, the render engine 120 is configured to check or detect potential collisions between the user avatar and one or more objects in the three-dimensional interactive visual simulation and avoids rendering user avatar such that user avatar does not overlap any object within the three-dimensional interactive visual simulation. This is further explained in relation to figure 2.

Figure 2 illustrates a method 200 of generating an interactive three-dimensional simulation 140 of a section of the industrial facility. In an example, the method 200 is realized by a display device (shown in figure 3).

At step 210, the display device obtains a point cloud model and a three-dimensional mesh model associated with the section of the industrial facility. The point cloud model is generated using a point cloud data of the section of the industrial facility. In an example, the point cloud model is transmitted to the display device by a model generation device. In another example, the point cloud model is generated by the display device.

The point cloud data of the industrial facility may be generated using a plurality of LiDAR (light detection and ranging) sensors by scanning the section of the industrial facility. The point cloud data includes spatial information of the section of the industrial facility in three dimensions. Such scans can be performed using a plurality of scanning mechanisms associated with LiDAR systems, such as opto-mechanical scanning, electromechnical scanning, solid state scanning and MEMs scanning. Subsequent to the generation of the point cloud data, the point cloud data is processed. The point cloud data is filtered to deal with noisy points, outliers, holes and other such anomalies. Then, feature and key point identification is performed on the point cloud data. Various features such as surfaces, feature lines, etc., are identified. Then, a coordinate system is generated and applied to the point cloud data and the various surfaces, edges and featured are segmented. After the segmentation, a random sample consensus or similar techniques are applied. Then, the resultant point data model is stored. Such generation of point cloud models is known in the state of the art and is well understood by a person skilled in the art.

The mesh cloud model is generated from the point cloud model by performing one or more surface reconstructions. Surface reconstruction techniques are known in the state of the art and include techniques which use various parameters such as volumetric smoothness, global regularity in the form of structural repetition, or other data-driven techniques, to aid in surface reconstruction. These techniques range from methods that assume a well-sampled point cloud, generalize to arbitrary shapes, and produce a watertight surface mesh, to methods that make very loose assumptions on the quality of the point cloud, operate on specific classes of shapes, and output a non-mesh-based shape representation.

Subsequent to obtaining the point cloud model and the 3d mesh model, at step 220 the display device generates a hybrid model based on the point cloud model and the three-dimensional mesh model. The hybrid model includes a first part associated with the point cloud model and a second part associated with the three-dimensional mesh model. The hybrid model accordingly includes data from the point cloud model and the mesh model. In an example, the hybrid model uses space partitioning data structures, like bounding volume hierarchies in order to optimized visualization and simulation. Accordingly, the first associated with point cloud model and the second part associated with the mesh model are stored into large kd-trees (k-dimensional tree) for fast data retrieval. This allow to quickly select which parts are of interest for different computations, like frustum culling which is used for rendering purpose. Additionally, for physical simulation, dynamic octrees are also used in the hybrid model. Combining these data structures together makes real-time user experience possible.

Then at step 230, the display device generates the interactive three-dimensional simulation of the section of the industrial facility based on the hybrid model. The one or more visual elements of the interactive three-dimensional simulation are generated in accordance with the first part of the hybrid model which contains the data of the point cloud model. In an example, the display device includes a render engine which is configured to render and display the one or more visual elements of the interactive three-dimensional simulation based on the first part of the hybrid model. Accordingly, the render engine utilizes the data of the point cloud model for generating the visual elements. The visual elements herein refer to the various graphical artifacts which generated on the display device for the user/operator to see.

In addition to rendering the visual elements based on the first part of the hybrid model, the display device also renders a visual object associated with the operator or the user. The visual object is used to represent the user within the simulation and accordingly, the render engine utilizes the perspective of the visual object associated with the user (also referred to as user avatar) to determine the view of the section according to which visual objects are rendered. During the start of rendering, a default view of the section is selected, and the visual elements are rendered based on the default view. Additionally, subsequent to the rendering of the visual elements, the display device receives user input indicative of the movement of the user avatar within the simulation. Accordingly, based on the user input, the display device (using the render engine and the hybrid model) updates the visual elements rendered on the display device. Additionally, prior to the updating the visual elements, the display device checks the user input against the meshes from the mesh model data as stored in the second part of the hybrid model to check if there are potential collisions between the user avatar and the meshes. According, if there are collisions detected, the updates to the render are not performed. Additionally, the physics of the interactive three-dimensional simulation is based on the second part of the hybrid model.

Accordingly, the current disclosure describes a method where the visual representation or simulation is generated using the hybrid model generated from the point model and the three-dimensional mesh model. Accordingly, using the hybrid model, the visual simulation may be generated without using texture streaming and does not require high texture packs. Additionally, using the hybrid model, collisions made be detected effectively using the mesh-based physics without requiring significant computations. The reconstructed 3D mesh is a perfect representation of the point cloud data set. Therefore, when physics based on the hybrid model are applied, the collisions are very accurate, and user collides even against small objects like manual valves or small piping. Additionally, the hybrid model allows for optimized data management, since data of the point cloud and the three dimensional meshes model is stored and processed together, therefore allowing for the render of the hybrid model to be streamed to the viewer faster. Moreover, since the render is done using the hybrid model, the render quality is higher than using preexisting mesh models. Accordingly, the current disclosure allows doing real time immersive visualization for operational reviews and training proposes of process plants. Additionally, this may be used for brownfield projects where there are no CAD data.

It is to be noted that while the above method 200 is explained in relation to the display device, the above method may be realized in another device or a plurality of devices. For example, the method 200 may be implemented in an edge server connected to a display device. Accordingly, the present disclosure can take a form of a computer program product comprising program modules accessible from computer-usable or computer-readable medium storing program code for use by or in connection with one or more computers, processing units, or instruction execution system.

Accordingly, the current disclosure describes a display device 300 as shown in figure 3. The display device 300 generates an interactive three-dimensional simulation 140 of a section of the industrial facility. The device 300 includes an I/O module 310 for transmitting and receiving data from other industrial devices. Additionally, the device 300 comprises one or more processors 320 connected to a memory module 330. The memory module 330 (also referred to as non-transitory storage medium 330) includes a plurality of instructions 335 which when executed on the one or more processors 320, cause the one or more processors 320 to obtain a point cloud model and a three dimensional mesh model associated with the section of the industrial facility, generate a hybrid model based on the point cloud model and the three dimensional mesh model, wherein the hybrid model includes a first part associated with the point cloud model and a second part associated with the three dimensional mesh model; and generate the interactive three dimensional simulation of the section of the industrial facility based on the hybrid model wherein one or more visual elements of the interactive three dimensional simulation are based on the first part of the hybrid model and wherein the physics of the interactive three dimensional simulation is based on the second part of the hybrid model. The one or more collisions in the three-dimensional simulation of the section of the industrial facility are determined using the second part of the hybrid model.

For the purpose of this description, a computer-usable or computer-readable non-transitory storage medium can be any apparatus that can contain, store, communicate, propagate, or transport the program for use by or in connection with the instruction execution system, apparatus, or device. The medium can be electronic, magnetic, optical, electromagnetic, infrared, or semiconductor system (or apparatus or device) or a propagation mediums in and of themselves as signal carriers are not included in the definition of physical computer-readable medium include a semiconductor or solid state memory, magnetic tape, a removable computer diskette, random access memory (RAM), a read only memory (ROM), a rigid magnetic disk and optical disk such as compact disk read-only memory (CD-ROM), compact disk read/write, and DVD. Both processing units and program code for implementing each aspect of the technology can be centralized or distributed (or a combination thereof) as known to those skilled in the art.

In view of the present disclosure, many modifications and variations would be present themselves, to those skilled in the art without departing from the scope of the various embodiments of the present disclosure, as described herein. The scope of the present disclosure is, therefore, indicated by the following claims rather than by the foregoing description. All changes, modifications, and variations coming within the meaning and range of equivalency of the claims are to be considered within their scope. All advantageous embodiments claimed in method claims may also be applied to device/non transitory storage medium claims.

## Claims

1. A method (200) of generating an interactive three-dimensional simulation (140) of a section of the industrial facility, the method (200) comprising:
a. obtaining (210) a point cloud model and a three-dimensional mesh model associated with the section of the industrial facility;
b. generating (220) a hybrid model based on the point cloud model and the three-dimensional mesh model, wherein the hybrid model includes a first part associated with the point cloud model and a second part associated with the three-dimensional mesh model; and
c. generating (230) the interactive three-dimensional simulation (140) of the section of the industrial facility based on the hybrid model wherein one or more visual elements of the interactive three-dimensional simulation are based on the first part of the hybrid model and wherein the physics of the interactive three-dimensional simulation is based on the second part of the hybrid model;
wherein one or more collisions in the three-dimensional simulation of the section of the industrial facility is determined using the second part of the hybrid model.

2. The method (200) as claimed in claim 1, wherein the method (200) comprises generating a file associated with the hybrid model using the point cloud model and the three-dimensional mesh model.

3. The method (200) as claimed in claim 1, wherein the method (200) comprises generating a user entity based one or more user inputs and detecting a collision between the user entity and an object in the three-dimensional simulation of the section of the industrial facility based on the second part of the hybrid model.

4. The method (200) as claimed in claim 1, wherein the three-dimensional simulation is for operator training.

5. The method (200) as claimed in claim 1, wherein the point cloud model and the three-dimensional mesh model are generated from a point cloud dataset associated with the section of the industrial facility.

6. A device (300) for generating an interactive three-dimensional simulation (140) of a section of the industrial facility, the device (300) comprising:
a. One or more processors (320) connected to a memory module (330), the one or more processors (320) configured to:
i. obtain a point cloud model and a three-dimensional mesh model associated with the section of the industrial facility;
ii. generate a hybrid model based on the point cloud model and the three-dimensional mesh model, wherein the hybrid model includes a first part associated with the point cloud model and a second part associated with the three-dimensional mesh model; and
iii. generate the interactive three-dimensional simulation of the section of the industrial facility based on the hybrid model wherein one or more visual elements of the interactive three-dimensional simulation are based on the first part of the hybrid model and wherein the physics of the interactive three-dimensional simulation is based on the second part of the hybrid model;
wherein one or more collisions in the three-dimensional simulation of the section of the industrial facility is determined using the second part of the hybrid model.

7. A non-transitory storage medium (330) for generating an interactive three-dimensional simulation (140) of a section of the industrial facility, the non-transitory storage medium (330) comprising a plurality of instructions (335), which when executed on one or more processors (320), cause the one or more processors (320) to:
i. obtain a point cloud model and a three-dimensional mesh model associated with the section of the industrial facility;
ii. generate a hybrid model based on the point cloud model and the three-dimensional mesh model, wherein the hybrid model includes a first part associated with the point cloud model and a second part associated with the three-dimensional mesh model; and
iii. generate the interactive three-dimensional simulation (140) of the section of the industrial facility based on the hybrid model wherein one or more visual elements of the interactive three-dimensional simulation (140) are based on the first part of the hybrid model and wherein the physics of the interactive three-dimensional simulation (140) is based on the second part of the hybrid model;
wherein one or more collisions in the interactive three-dimensional simulation (140) of the section of the industrial facility is determined using the second part of the hybrid model.
